# EUROPÄISCHE PATENTSCHRIFT

(11) **EP 3 278 411 B1**
(45) Veröffentlichungstag und Bekanntmachung des Hinweises auf die Patenterteilung: **26.05.2021**
(21) Anmeldenummer: 16709086.9
(22) Anmeldetag: 10.03.2016
(51) Int. Cl.: H02B 13/025, H02B 1/32, H01H 9/34, H02B 1/56

(54) **NIEDERSPANNUNGS-SCHALTSCHRANK MIT VERRINGERTEM RISIKO FÜR DAS AUFTRETEN EINES STÖRLICHTBOGENS**
LOW-VOLTAGE SWITCHGEAR CABINET WITH REDUCED RISK OF THE OCCURRENCE OF INTERNAL ARCING
ARMOIRE ÉLECTRIQUE BASSE TENSION À RISQUE D'APPARITION D'ARC ÉLECTRIQUE RÉDUIT

(30) Priorität: 03.04.2015 DE 102015105191
(43) Veröffentlichungstag der Anmeldung: 07.02.2018
(73) Patentinhaber: Eaton Intelligent Power Limited, Dublin 4 (IE)
(72) Erfinder: REUBERGER, Georg, 3931 Schweiggers (AT)
(74) Vertreter: Eaton IP Group EMEA
(86) Internationale Anmeldenummer: PCT/EP2016/055174
(87) Internationale Veröffentlichungsnummer: WO 2016/156004

(56) Entgegenhaltungen:
- EP-A1- 1 335 787
- EP-A1- 1 835 580
- WO-A1-00/65621
- WO-A1-2014/209342
- WO-A2-2015/009291
- DE-A1-102013 103 443
- DE-C1- 19 742 433
- DE-U1- 20 215 343
- US-A1- 2011 299 228
- US-A1- 2015 015 997
- US-B1- 6 388 867
- US-B1- 6 410 844
- US-B1- 6 977 354

## Beschreibung

### TECHNISCHES GEBIET

Die Erfindung betrifft einen Schaltschrank, welcher ein Gestell sowie zumindest ein im Gestell angeordnetes Schaltgerät der Niederspannungstechnik umfasst. Das Schaltgerät weist ein Gehäuse, einen im Gehäuse angeordneten, ungekapselten Schaltkontakt, eine optionale im Gehäuse angeordnete Lichtbogenlöscheinrichtung sowie einen Auslass für heiße Schaltgase eines Kontaktabbrandes des Schaltkontakts aus dem Gehäuse auf. Zudem ist eine dem genannten Auslass nachgeordnete Kühleinrichtung für die genannten Schaltgase vorgesehen.

### STAND DER TECHNIK

Ein Schaltschrank der genannten Art ist aus dem Stand der Technik grundsätzlich bekannt. Beispielsweise offenbart die WO 2014/068052 A1 dazu eine Kühlvorrichtung für während und nach einem Schaltvorgang aus elektrischen Installationsgeräten (vorzugsweise aus Niederspannungs-Leistungsschaltern) austretende heiße Gase. Im Strömungsweg der heißen Schaltgase ist ein Fenster mit engen Durchtrittsöffnungen anordnet. Das Fenster ist dabei aus einem Material hoher Wärmeleitfähigkeit und hoher Wärmekapazität ausgebildet. Weiterhin sind die Durchtrittsöffnungen im Fenster ebenflächig ausgebildet und parallel zur Strömungsrichtung der Schaltgase angeordnet, so dass keine Umlenkung der Schaltgase stattfindet.

Das Schaltgas ("blowout gas") enthält zumindest Metalldampf, der von den abbrennenden Schaltkontakten oder auch von den Lichtbogenleit- beziehungsweise Lichtbogenlöschblechen des Schaltgeräts stammt. Daneben kann das Schaltgas auch noch andere Bestandteile enthalten, beispielsweise verdampften Kunststoff vom Gehäuse des Schaltgeräts. Da dieses Schaltgas elektrisch leitfähig ist, ist es im Schaltschrank grundsätzlich unerwünscht. Generell dient die Kühlvorrichtung dazu, die heißen Schaltgase eines Kontaktabbrandes des Schaltkontakts, welche beim Öffnen des Schaltkontakts durch den Schaltlichtbogen entstehen, abzukühlen, bevor sie aus dem Gehäuse des Installationsgeräts austreten. Dabei wird auch der Druck des Schaltgases reduziert. Vorzugsweise wird das Schaltgas soweit abgekühlt, dass das im Gas enthaltene Metall kondensiert und sich an der Kühleinrichtung niederschlägt, sodass die elektrische Leitfähigkeit des Schaltgases herabgesetzt wird.

Die in der WO 2014/068052 A1 vorgestellte Kühleinrichtung weist eine Reihe von Nachteilen auf. Zum Einen ist die Kühleinrichtung ausschließlich auf die Erfordernisse des Schaltgeräts abgestimmt, nimmt aber keinerlei Rücksicht auf die am Einbauort vorliegende Situation. Zum anderen kann die Kühleinrichtung nur schwer getauscht werden, wenn diese kaputt ist. In der Regel muss dazu der Schaltschrank außer Betrieb genommen und das Schaltgerät ausgebaut werden. Weiterhin verursachen die Schaltgase zum Teil erhebliche Kräfte auf die Befestigung der Kühleinrichtung am Schaltgerät, wodurch dieses im Befestigungsbereich vergleichsweise massiv aufgebaut sein muss. Insbesondere bei kurz aufeinander folgenden Schaltvorgängen kann sich die Kühlwirkung der Kühleinrichtung auch erschöpfen, und es können erhebliche Mengen an heißem, leitfähigem Schaltgas in das Schaltschrankinnere austreten. DE2165942 A1 offenbart einen Schaltschrank mit einer Lichtbogenkammer die einen ortsfest im Schaltschrank angeordneten Kammerteil aufweist. DE20215343 U offenbart einen Schaltgasdämpfer, der über Befestigungselemente mit Seitenwänden eines Einschubrahmens verbunden ist.

### OFFENBARUNG DER ERFINDUNG

Eine Aufgabe der Erfindung ist es daher, einen verbesserten Schaltschrank anzugeben. Insbesondere sollen die oben erwähnten Nachteile vermieden werden.

Die Aufgabe der Erfindung wird mit einem Schaltschrank mit den Merkmalen gemäß Anspruch 1 gelöst, bei dem die Kühleinrichtung am Gestell des Schaltschranks befestigt ist, insbesondere nur am Gestell (und nicht am Schaltgerät).

Damit einhergehend resultiert gleich eine Reihe von Vorteilen. Die Fokussierung bei der Entwicklung weg vom Schaltgerät und hin zum Schaltschrank ermöglicht eine Anpassung der Kühleinrichtung an die Gegebenheiten im Schaltschrank. Durch die Befestigung der Kühleinrichtung am Gestell des Schaltschranks kann die von der Kühleinrichtung aufgenommene Wärme gut abgeführt werden. Die Wirkung der Kühleinrichtung bleibt daher auch bei kurz aufeinander folgenden Schaltvorgängen erhalten. Zudem kann eine Kühlwirkung je nach Einbausituation variiert werden. Ist nur wenig Kühlwirkung erforderlich, können kleine Kühleinrichtungen verbaut werden, bei erhöhtem Kühlbedarf dementsprechend größere. Zum Beispiel kann an manchen Stellen mit 20% Druckreduzierung anstatt der üblichen 80-90% das Auslangen gefunden werden, wodurch das für die Kühleinrichtungen erforderliche Volumen und damit einhergehend das Volumen des Schaltschranks sowie das erforderliche Volumen zum Einbau des betroffenen Schaltgerät reduziert werden kann. Die Befestigung der Kühlvorrichtungen am Gestell des Schaltschranks erlaubt aber auch, eine Rahmen-, Tür- und Schottungskonstruktion des Schaltschranks fragiler auszuführen, als dies bisher möglich war. Durch die direkte und potentiell stabilere Anbindung der Kühlvorrichtung am Gestell des Schaltschranks kann die Kühlvorrichtung dem Schaltgas eine größere Energiemenge entziehen als nach dem Stand der Technik, beispielsweise durch eine spezielle Führung des Schaltgases innerhalb der Kühlvorrichtung und auch durch die Größe der Kühlvorrichtung selbst. Das bedeutet, dass das Schaltgas mit deutlich geringerem Druck in das Schaltschrankinnere austritt und die Rahmen-, Tür- und Schottungskonstruktion des Schaltschranks daher auch geringeren Druckstößen standhalten muss. Demzufolge kann die Rahmen-, Tür- und Schottungskonstruktion wie erwähnt fragiler ausgeführt werden als bisher.

Weitere vorteilhafte Ausgestaltungen und Weiterbildungen der Erfindung ergeben sich aus den Unteransprüchen sowie aus der Beschreibung in Zusammenschau mit den Figuren.

Die Erfindung ist besonders wirksam, wenn im Schaltschrank blanke Stromleiter (z.B. "bus bars") angeordnet sind und ein Auslass der Kühleinrichtung an einem gefährdeten Bereich zwischen zwei blanken Stromleitern, welche für unterschiedliches Spannungspotential vorgesehen sind, vorbeiweist. Durch diese Maßnahmen wird vermieden, dass das Schaltgas die Isolation zwischen Leitern auf unterschiedlichem Spannungspotential herabsetzt und einen Störlichtbogen verursacht.

Von besonderem Vorteil ist es auch, wenn eine Zone in Ausblasrichtung des Auslasses der Kühleinrichtung bis zu einem Abstand von 100 mm frei von Abschottungen/Prallblechen und frei von Bereichen zwischen zwei blanken Stromleitern ist, welche für unterschiedliches Spannungspotential vorgesehen sind. Dabei wird davon ausgegangen, dass das Schaltgas auch nach dem Austritt aus der Kühleinrichtung noch weiter abkühlt und seine Leitfähigkeit nach und nach verliert, wobei der Abstand je nach Größe der Kühlvorrichtungen in der Regel auf 100 mm reduziert werden kann, bei sehr großen Kühlvorrichtungen sogar darunter. Durch das Weglassen von Abschottungen und Prallblechen in dieser Zone ergibt sich auch ein einfacher Aufbau des Schaltschranks.

Grundsätzlich ist zwischen einem Schaltlichtbogen und einem Störlichtbogen zu unterscheiden. Der Schaltlichtbogen entsteht in einem Schaltgerät der Niederspannungstechnik in offener Bauweise im normalen Betrieb beim Öffnen eines Schaltkontakts. Der Schaltkontakt ist bei diesen Geräten nicht gekapselt, wodurch Luft als Isolationsstrecke beim offenen Schaltkontakt dient. Dies im Gegensatz zu Schaltgeräten der Mittel- und Hochspannungstechnik, die in aller Regel über gekapselte Schaltkontakte verfügen, bei denen ein Isolationsgas oder Vakuum als Isolationsstrecke dient, und die demzufolge grundsätzlich keine aus dem Gerät austretenden, heißen, leitfähigen Gase produzieren. Die Energie des an sich relativ niederenergetischen Schaltbogens wird durch geeignete Maßnahmen, wie zum Beispiel durch Lichtbogenleit- beziehungsweise Lichtbogenlöschbleche abgebaut. Die Leitfähigkeit, sowie Druck und Temperatur des Schaltgases werden durch die bereits angesprochene Kühleinrichtung abgebaut. Im Endergebnis sind die Abläufe bei einem Schaltlichtbogen im Wesentlichen planbar beziehungsweise vorhersehbar.

Im krassen Gegensatz dazu steht der Störlichtbogen, der im gewöhnlichen Betrieb nicht auftritt und der ein Vielfaches der von einem Schaltlichtbogen ausgehenden zerstörerischen Energie aufweist. Beispielsweise kann der bei einem Störlichtbogen durch die aufgeheizte Luft entstehende Druck ohne geeignete Gegenmaßnahmen einen Schaltschrank zum Bersten bringen und birgt daher ein hohes Gefahrenpotential. Zumeist wird der Störlichtbogen durch Ausschalten der Energiezufuhr beziehungsweise durch Kurzschluss der vom Störlichtbogen betroffenen Phasen gelöscht. Aufgrund der sehr hohen Ströme sind die dabei eingesetzten Schaltgeräte enormen Verschleiß unterworfen. Ein Störlichtbogen sollte daher nach Möglichkeit vermieden werden, wozu auch das Leiten leitfähiger Schaltgase vorbei an gefährdeten Bereichen einen wesentlichen Beitrag leistet. Insbesondere können auch kurz aufeinanderfolgende Schaltvorgänge und damit einhergehend die Entstehung immer heißerer und leitfähigerer Schaltgase dann keinen Störlichtbogen verursachen. Als Schaltgerät kann generell beispielsweise ein Leistungsschalter ein Trennschalter oder ein Schutzschalter vorgesehen sein.

Vorteilhaft ist es, wenn eine Richtung des Auslasses der Kühleinrichtung bis zu einem Abstand von 300 mm frei von Abschottungen/Prallblechen ist, jedoch dort ein Bereich zwischen zwei blanken Stromleitern angeordnet ist, welche für unterschiedliches Spannungspotential vorgesehen sind. Dadurch kann der Schaltschrank kompakt aufgebaut werden. Bis dato ist man davon ausgegangen, in der gegebenen Zone keine gefährdeten Bereiche anzuordnen. Durch die potentiell verbesserte Druckminderung der Kühlvorrichtung ist dies nun aber möglich. Durch das Weglassen von Abschottungen und Prallblechen in dieser Zone ergibt sich zudem ein einfacher Aufbau des Schaltschranks

Vorteilhaft ist es darüber hinaus, wenn der Auslass des Schaltgeräts und der Auslass der Kühleinrichtung unterschiedlich orientiert sind. Auf diese Weise kann das Schaltgas von gefährdeten Bereichen weggeleitet werden, ohne dass dazu die Position des Schaltgeräts geändert werden müsste.

Günstig ist es auch, wenn die Kühleinrichtung einen Stapel von Kühlblechen aufweist, die voneinander beabstandet sind. Durch die vergleichsweise große Oberfläche und die relativ hohe Wärmekapazität der Kühlbleche kann dem heißen Schaltgas viel Energie entzogen werden. Dementsprechend wird die Temperatur, der Druck und die elektrische Leitfähigkeit maßgeblich reduziert. Alternativ zu den Kühlblechen oder zusätzlich dazu können auch andere Maßnahmen zur Reduktion von Temperatur, Druck und elektrischer Leitfähigkeit ergriffen werden. Beispielsweise kann die Kühleinrichtung zu diesem Zweck Stahlwolle, Stahlspäne, Keramikplatten oder dergleichen beinhalten.

Günstig ist es in obigem Zusammenhang, wenn die Kühlbleche in Richtung des Auslasses des Schaltgeräts ausgerichtet sind. Auf diese Weise wird die Strömung des heißen Schaltgases nur wenig beeinflusst, wodurch dieses die Kühleinrichtung mehr oder minder rückstaufrei passieren können.

Vorteilhaft ist es aber auch, wenn die Kühlbleche gegenüber dem Auslass des Schaltgeräts geneigt sind. Durch die Umlenkung der Strömung wird der Wärmeübergang auf die Kühlbleche verbessert und der Druck des Gases zusätzlich reduziert. Durch die Anbindung der Kühleinrichtung an das Gestell des Schaltschranks können die beim Umlenken der Strömung entstehenden Kräfte gut abgeleitet werden, ohne dass das Schaltgerät als solches übermäßig stabil ausgeführt werden müsste.

Vorteilhaft ist es weiterhin, wenn die Kühlbleche in einem kanalförmigen, metallenen Rahmen angeordnet sind. Dadurch kann die Kühlwirkung noch weiter gesteigert werden, da auch der Metallrahmen ein nicht unerhebliches Wärmeaufnahmevermögen aufweist. Zudem kann die aufgenommene Wärme auch gut auch wieder abgegeben werden, sowohl an den Innenraum des Schaltschranks als auch wegen der Verbindung der Kühleinrichtung mit dem Gestell an den Schaltschrank selbst.

Vorteilhaft ist es darüber hinaus, wenn zwischen dem Gestell und der Kühleinrichtung ein elektrischer Isolator angeordnet ist. Dadurch wird vermieden, das der Schaltschrank oder Teile davon ein unerwünschtes Spannungspotential annehmen.

Gemäß der Erfindung ist die Befestigung der Kühleinrichtung am Gestell in einem fingersicheren Bereich angeordnet. Auf diese Weise kann die Kühleinrichtung gefahrlos getauscht werden, insbesondere auch im laufenden Betrieb der im Schaltschrank befindlichen Einbauten. Ein fingersicherer Bereich ist dadurch gekennzeichnet, dass mit dem Finger (oder auch mit größeren Werkzeugen) keine spannungsführenden Teile erreicht werden können. Insbesondere sind Durchbrüche vom fingersicheren Bereich gemäß IPXXB / IEC61439 in einen Gefahrenbereich kleiner als ein Normfinger dick ist.

Besonders vorteilhaft ist es auch, wenn die Befestigung der Kühleinrichtung auf einer Außenseite des Schaltschranks angeordnet ist. Dadurch kann die Kühleinrichtung besonders bequem getauscht werden. Beispielsweise kann der Schaltschrank einen Einschub für die Kühleinrichtung aufweisen.

Schließlich ist es auch von Vorteil, wenn der Schaltschrank mehrere Kühleinrichtungen aufweist, die einem Schaltgerät oder mehreren Schaltgeräten zugeordnet und unterschiedlicher Bauart, insbesondere unterschiedlich groß, sind. Dadurch ergibt sich eine besonders gute Anpassbarkeit der Kühleinrichtungen an die Gegebenheiten im Schaltschrank. Beispielsweise kann bei beengtem Bauraum kleineren Kühleinrichtungen der Vorzug gegeben werden, um das Volumen des Schaltschranks insgesamt klein zu halten. In kritischen Bereichen kann dennoch eine relativ große Kühleinrichtung vorgesehen sein, um das heiße Schaltgas stark abzukühlen und/oder von einem Gefahrenbereich wegzulenken. Unter Umständen kann bei einigen Auslässen der Schaltgeräte eine Kühleinrichtung auch komplett entfallen. Der Ansatz, die Kühleinrichtungen an den Schaltschrank und nicht an das Schaltgerät anzupassen, kommt bei der Verwendung von Kühleinrichtungen unterschiedlicher Bauart besonders zum Tragen.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Fig. 1: einen beispielhaften Schaltschrank in Vorderansicht;
- Fig. 2: einen vergrößerten Ausschnitt aus der Ansicht der Fig. 1;
- Fig. 3: ein Schaltgerät mit nachgeordnete Kühleinrichtungen in Vorderansicht;
- Fig. 4: wie Fig. 3, nur in Schrägansicht;
- Fig. 5: eine Kühleinrichtung in Seitenansicht;
- Fig. 6: die Kühleinrichtung aus Fig. 5 in Vorderansicht und
- Fig. 7: die Kühleinrichtung aus Fig. 5 in Explosionsdarstellung.

### DETAILIERTE BESCHREIBUNG DER ERFINDUNG

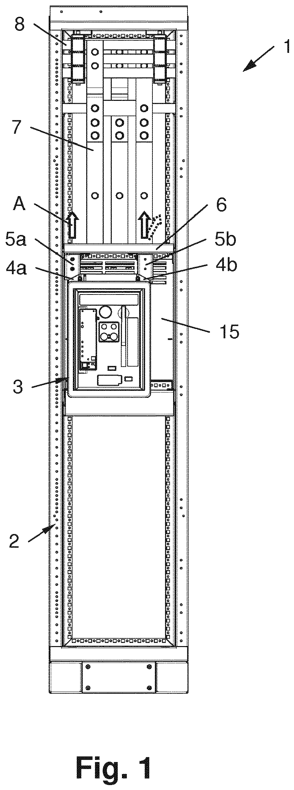

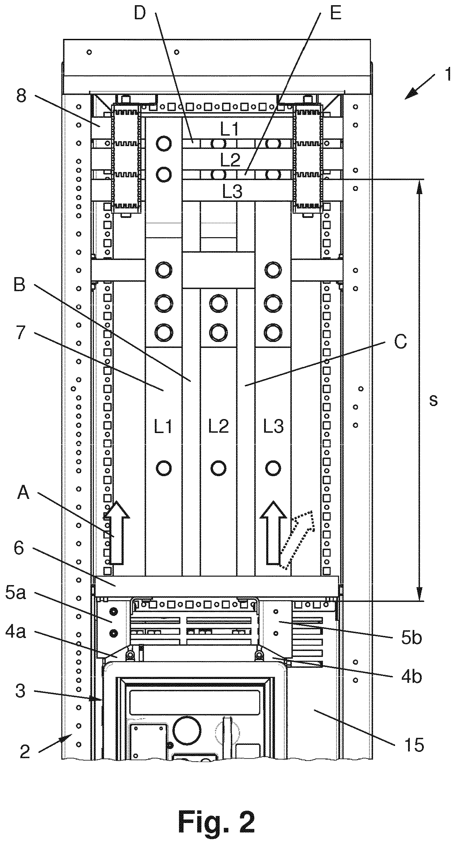

Fig. 1 zeigt einen beispielhaften Schaltschrank 1 in Vorderansicht, die Fig. 2 einen vergrößerten Ausschnitt des Schaltschranks 1 ebenfalls in Vorderansicht. Der Schaltschrank 1 umfasst einen Rahmen respektive ein Gestell 2, und ein im Gestell 2 angeordnetes Schaltgerät 3 der Niederspannungstechnik. Das Schaltgerät 3 weist ein Gehäuse auf, einen im Gehäuse angeordneten, ungekapselten Schaltkontakt, eine optionale im Gehäuse angeordnete Lichtbogenlöscheinrichtung sowie einen Auslass 4a, 4b für heiße Schaltgase eines Kontaktabbrandes des Schaltkontakts. Zudem umfasst der Schaltschrank 1 eine dem genannten Auslass 4a, 4b nachgeordnete Kühleinrichtung 5a, 5b für die genannten Schaltgase.

Der Schaltkontakt sowie die Lichtbogenlöscheinrichtung sind innerhalb des Gehäuses des Schaltgeräts 3 angeordnet und in den Figuren daher nicht sichtbar. Diese sind jedoch von an sich bekannter Bauart. Im Gegensatz dazu ist jedoch eine Beplankung oder Verkleidung des Schaltschranks 1, welche in aller Regel vorhanden ist, in der Fig. 1 abgenommen und somit nicht dargestellt, sodass der Blick in das Innere des Schaltschranks 1 freigegeben wird.

Das Schaltgerät 3 kann beispielsweise als Leistungsschalter, Trennschalter oder Schutzschalter ausgebildet sein. Als Schaltgerät 3 der Niederspannungstechnik ist dieses in offener Bauweise ausgeführt, das heißt der Schaltkontakt ist nicht gekapselt, sodass Luft als Isolationsstrecke im offenen Zustand des Schaltkontakts dient. Beim Öffnen des Schaltkontakts unter Last entsteht ein Schaltlichtbogen und in Folge heißes, elektrisch leitfähiges Schaltgas ("blowout gas"), das Metalldampf vom abbrennenden Schaltkontakt oder auch von den Lichtbogenleit- beziehungsweise Lichtbogenlöschblechen enthält. Daneben kann das Schaltgas beispielsweise auch verdampften Kunststoff vom Gehäuse des Schaltgeräts 3 beinhalten. Das Schaltgas tritt aus den Auslässen 4a, 4b aus dem Schaltgerät 3 aus und passiert dann die nachgeordneten Kühleinrichtung 5a, 5b. Beim Passieren der Kühleinrichtung 5a, 5b wird das aus dem Schaltgerät 3 austretende Schaltgas abgekühlt wodurch Temperatur, Druck und Leitfähigkeit desselben vermindert werden. Vorzugsweise wird das Schaltgas soweit abgekühlt, dass das im Gas enthaltene Metall kondensiert und sich an der Kühleinrichtung 5a, 5b niederschlägt, sodass dem Gas quasi die elektrisch leitfähigen Bestandteile entzogen werden.

Im Schaltschrank 1 sind neben den bereits genannten Baugruppen auch blanke Stromleiter 7 und 8 angeordnet (sogenannte "bus bars"). Die Stromleiter 7 verlaufen dabei vertikal, die Stromleiter 8 horizontal. Zudem sind die Stromleiter 7, 8 auch für unterschiedliche Spannungspotentiale vorgesehen. Rein beispielhaft sind die Stromleiter 7 und 8 den Phasen L1, L2 und L3 eines Dreiphasensystems zugeteilt. Selbstverständlich könnte auch ein Nullleiter vorgesehen sein und selbstverständlich könnten die Stromleiter 7 und 8 auch anderen Spannungspotentialen zugeteilt sein.

Im Betrieb besteht somit grundsätzlich die Gefahr eines elektrischen Überschlags zwischen den Phasen L1, L2 und L3 respektive die Gefahr für das Entstehen eines Störlichtbogens. Durch einen Störlichtbogen werden große Energiemengen unkontrolliert freigesetzt, und der dadurch entstehende Druck kann den Schaltschrank 1 zum Bersten bringen oder anderweitig großen Schaden anrichten. Zumeist wird der Störlichtbogen durch Ausschalten der Energiezufuhr beziehungsweise durch Kurzschluss der vom Störlichtbogen betroffenen Phasen L1, L2 und L3 gelöscht, jedoch muss dabei hoher Verschleiß der betroffenen Schaltgeräte in Kauf genommen werden. Ein Störlichtbogen sollte daher im gewöhnlichen Betrieb vermieden werden. Insbesondere soll Isolationsfähigkeit in den für einen Überschlag gefährdeten Bereichen B..E zwischen den Phasen L1, L2 und L3 aufrechterhalten werden.

Eine wesentliche Maßnahme hierfür besteht darin, die leitfähigen Schaltgases von den gefährdeten Bereichen B..E fernzuhalten.

Vorteilhaft ist es daher, wenn ein Auslass der Kühleinrichtung 5a, 5b an den Bereichen B und C zwischen zwei blanken Stromleitern 7, L1..L3, welche für unterschiedliches Spannungspotential vorgesehen sind, vorbeiweist, so wie das in den Figuren 1 und 2 dargestellt ist. In den Figuren 1 und 2 sind zur Verdeutlichung zwei Pfeile in Ausblasrichtung Ader Kühleinrichtungen 5a, 5b dargestellt. Wie aus den Figuren erkennbar ist, bläst die linke Kühleinrichtung 5a links von der Phase L1 vorbei und die rechte Kühleinrichtung 5b über die Phase L3 hinweg. Die Bereiche B und C werden von den leitfähigen Schaltgasen jedoch nicht oder nur in geringem Ausmaß erreicht. Für eine höhere Sicherheit kann die Ausblasrichtung A der rechten Kühleinrichtung 5b auch nach rechts geneigt sein, so wie dies in den Figuren 1 und 2 mit einem strichlierten Pfeil dargestellt ist. Auf diese Weise wird die Ausbildung eines Störlichtbogens weitestgehend vermieden, auch wenn kurz aufeinanderfolgende Schaltvorgänge die Entstehung immer heißerer und damit immer leitfähigerer Schaltgase verursachen.

Streng genommen, kreuzt die Ausblasrichtung A die gefährdeten Bereiche D und E zwischen den Stromleitern 8, L1..L3. Es kann jedoch davon ausgegangen werden, dass die Schaltgase bis dorthin schon soweit abgekühlt sind, dass sie ihre Leitfähigkeit weitestgehend verloren haben. Von Vorteil ist es, einen Sicherheitsabstand s zwischen den Kühleinrichtungen 5a, 5b und den gefährdeten Bereichen D, E vorzusehen. Vorzugsweise ist in einem Abstand s von bis zu 100 mm demzufolge kein Bereich B..E zwischen zwei blanken Stromleitern 7, 8, L1..L3, welche für unterschiedliches Spannungspotential vorgesehen sind, in Richtung A des Auslasses der Kühleinrichtung 5a, 5b angeordnet. Auch ist in Richtung A des Auslasses in diesem Beispiel auch keine Abschottung oder ein Prallblech vorgesehen, wodurch der Aufbau des Schaltschranks 1 vereinfacht wird. Eine Maßnahme, um einen kompakten Aufbau des Schaltschranks 1 zu erreichen, besteht darin, in einem Abstand s von weniger als 300 mm Bereiche B..E zwischen zwei blanken Stromleitern 7, 8, L1..L3, welche für unterschiedliches Spannungspotential vorgesehen sind, in Richtung A des Auslasses der Kühleinrichtung 5a, 5b anzuordnen. Bis dato ist man davon ausgegangen, innerhalb des gegebenen Abstands keine gefährdeten Bereiche B..E anzuordnen. Durch die potentiell verbesserte Druckminderung der Kühlvorrichtungen 5a, 5b ist dies nun aber möglich.

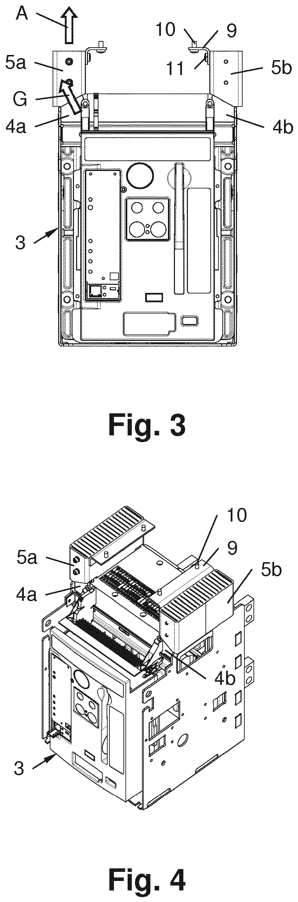

Eine zentraler Punkt zur Umsetzung der obigen Maßnahmen ist die Befestigung der Kühleinrichtungen 5a, 5b am Gestell 2 des Schaltschranks 1, hier konkret an einer Traverse respektive Strebe 6. Vorteilhaft ist es weiterhin, wenn die Kühleinrichtungen 5a, 5b - wie in den Figuren 1 und 2 dargestellt - nur mit der Strebe 6 (und nicht mit dem Schaltgerät 3) verbunden sind. Die Fig. 3 zeigt dazu eine Vorderansicht des Schaltgeräts 3 mit den nachgeordneten Kühleinrichtungen 5a, 5b, die mit Hilfe von Befestigungswinkeln 9 und Schrauben 10 und 11 an der Strebe 6 befestigt sind. Die Fig. 4 zeigt dieselbe Anordnung in Schrägansicht. An dieser Stelle soll nochmals klargestellt werden, dass die Kühleinrichtungen 5a, 5b nicht zwangsläufig mit dem Schaltgerät 3 verbunden sind, auch wenn dies in den Figuren 3 und 4 optisch so wirkt.

Durch die Befestigung der Kühleinrichtungen 5a, 5b an der Strebe 6 des Gestells 2 können diese gut an die Gegebenheiten des Schaltschranks 1 angepasst werden. Beispielsweise können die Auslässe 4a, 4b des Schaltgeräts 3 und die Auslässe der Kühleinrichtung 5a, 5b unterschiedlich orientiert sein, so wie dies in den Figuren 1 bis 4 dargestellt ist. In der Fig. 3 sind dazu die Ausblasrichtung A aus der Kühleinrichtung 5a und die Ausblasrichtung G aus dem Auslass 4a eingezeichnet. Durch diese Maßnahmen wird eine Reflexion beziehungsweise übermäßige Verwirbelung der Schaltgase an der Schaltschrankwand vermieden, welche andernfalls zu einer Herabsetzung der Isolationsfähigkeit der gefährdeten Bereiche B..E führen könnte. Ein weitere Grund für das Ablenken der Schaltgase könnten empfindliche Geräte in Richtung des Auslasses 4a, 4b sein.

In den Figuren 1 bis 4 sind die Kühleinrichtungen 5a, 5b durch einfache gerade (jedoch gegenüber den Auslässen 4a, 4b geneigte) Kanäle gebildet. Dies ist zwar vorteilhaft, jedoch nicht zwingend. Die Kühleinrichtungen 5a, 5b können auch aufwändiger gestaltet sein und Bögen und dergleichen aufweisen sowie deutlich länger sein als dargestellt. Dadurch können die Schaltgase auch von einem gefährdeten Bereich B..E weiter weg geleitet werden. Insbesondere kann auch eine Umlenkung der Schaltgase um bis zu 180° erfolgen.

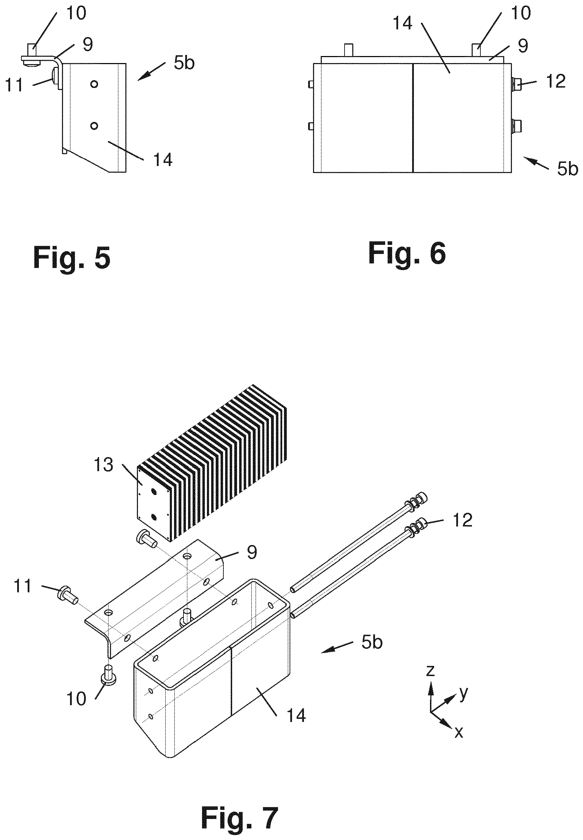

Die Figuren 5 bis 7 zeigen die Kühleinrichtung 5b nun im Detail, die Fig. 5 in Vorderansicht, die Fig. 6 in Seitenansicht und die Fig. 7 in Explosionsdarstellung. Die darin enthaltene technische Lehre ist dabei nicht nur auf die Kühleinrichtung 5b, sondern in analoger Weise auch auf die Kühleinrichtung 5a anwendbar.

Die Kühleinrichtung 5b weist in diesem Beispiel einen Stapel von Kühlblechen 13 auf, die voneinander beabstandet sind. Im vorliegenden Beispiel sind die Kühlbleche 13 zudem in Richtung G des Auslasses 4b des Schaltgeräts 3 ausgerichtet. Die Kühlbleche 13 liegen also in der x-z-Ebene. Dies ist aber nicht zwingend, sondern die Kühlbleche 13 könnten auch gegenüber der Richtung G des Auslasses 4b geneigt sein, also um die x-Achse geneigt sein. Beispielsweise könnten die Kühlbleche 13 in der Ansicht der Fig. 6 somit nach links oder rechts geneigt sowie bogenförmig verlaufend sein.

Denkbar wäre auch, dass der Stapel der Kühlbleche 13 gegenüber der Darstellung in der Fig. 7 um 90° gedreht und längs des Kühlkörpers 5b ausgerichtet ist. Die Kühlbleche 13 sind dann dementsprechend länger, jedoch in geringer Zahl vorhanden. Dabei können die Kühlbleche 13 wiederum in Richtung G des Auslasses 4b des Schaltgeräts 3 ausgerichtet und in der y-z-Ebene liegen oder auch gegenüber der Richtung G des Auslasses 4b geneigt sein, also um die y-Achse gedreht sein. Beispielsweise könnten die Kühlbleche somit in der Ansicht der Fig. 5 nach links oder rechts geneigt sowie bogenförmig verlaufend sein.

Durch die vergleichsweise große Oberfläche und die relativ hohe Wärmekapazität der Kühlbleche 13 kann dem heißen Schaltgas viel Energie entzogen werden. Dementsprechend werden die Temperatur, der Druck und die elektrische Leitfähigkeit des Gases maßgeblich reduziert. Sind die Kühlbleche 13 in Richtung G des Auslasses 4b des Schaltgeräts 3 ausgerichtet, wird die Strömung der heißen Schaltgase nur wenig beeinflusst, wodurch diese die Kühleinrichtung 5b mehr oder minder rückstaufrei passieren können.

Sind die Kühlbleche 13 dagegen gegenüber dem Auslass 4b des Schaltgeräts 3 geneigt angeordnet, wird der Wärmeübergang auf die Kühlbleche 13 verbessert und der Druck des Gases zusätzlich reduziert. Durch die Anbindung der Kühleinrichtung 5b an das Gestell 2, 6 des Schaltschranks 1 können die beim Umlenken der Strömung entstehenden Kräfte gut abgeleitet werden, ohne dass das Schaltgerät 3 als solches übermäßig stabil ausgeführt werden müsste.

Vorteilhaft ist es weiterhin, wenn die Kühlbleche 13 in einem kanalförmigen, metallenen Rahmen 14 angeordnet sind, so wie dies in den Figuren 1 bis 7 dargestellt ist. Dadurch kann die Kühlwirkung noch weiter gesteigert werden, da auch der Metallrahmen 14 ein nicht unerhebliches Wärmeaufnahmevermögen aufweist. Zudem kann die aufgenommene Wärme auch gut auch wieder abgegeben werden, sowohl an den Innenraum des Schaltschranks 1 als auch wegen der Verbindung der Kühleinrichtung 5b mit dem Gestell 2, 6 an den Schaltschrank 1 selbst.

Vorteilhaft ist es darüber hinaus, wenn zwischen dem Gestell 2, 6 und der Kühleinrichtung 5b ein elektrischer Isolator angeordnet ist. Beispielsweise kann diese auf der Verbindungsfläche des Haltewinkels 9 zum Metallrahmen 14 hin und/oder auf der Verbindungsfläche des Haltewinkels 9 zum zur Strebe 6 hin vorgesehen sein. Dadurch wird vermieden, das der Schaltschrank 1 oder Teile davon ein unerwünschtes Spannungspotential annehmen. Gegebenenfalls kann an der genannten Verbindungsfläche auch ein über die Verbindungsfläche hinausragendes Blech mit verschraubt werden, welches gleichsam als Kühlrippe fungiert und somit die Kühlwirkung der Kühleinrichtung 5b verbessert.

Gemäß der Erfindung sind die Befestigungsschrauben 10 und/oder 11 für die Kühleinrichtung 5b in einem fingersicheren Bereich des Schaltschranks 1 angeordnet. Auf diese Weise kann die Kühleinrichtung 5b gefahrlos getauscht werden, insbesondere auch im laufenden Betrieb der im Schaltschrank 1 befindlichen Einbauten. Ein fingersicherer Bereich ist dadurch gekennzeichnet, dass mit dem Finger (oder auch mit größeren Werkzeugen) keine spannungsführenden Teile erreicht werden können. Insbesondere sind Durchbrüche vom fingersicheren Bereich gemäß IPXXB / IEC61439 in einen Gefahrenbereich kleiner als ein Normfinger dick ist. In den Figuren 1 und 2 ist hinter dem Schaltgerät 3, jedoch vor den Stromleitern 7 dazu eine Trennwand 15 vorgesehen, die ein Berühren blanker spannungsführender Teile selbst bei abgenommener Vorderwand respektive bei geöffneter Tür verhindert. Die Kühleinrichtung 5b kann somit gefahrlos gewartet oder getauscht werden.

Besonders vorteilhaft ist es in diesem Zusammenhang auch, wenn die Befestigung der Kühleinrichtung 5b überhaupt auf einer Außenseite des Schaltschranks 1 angeordnet ist. Beispielsweise könnten anstelle des Befestigungswinkels 9 frontseitige Gewindebohrungen im Rahmen 14 vorgesehen sein. Mittels Schrauben könnte die Kühleinrichtung 5b direkt von der Vorderseite des Schaltschranks 1 aus mit dem Gestell 2 verschraubt sein. Ein Tausch der Kühleinrichtung 5b könnte dadurch besonders bequem erfolgen. Beispielsweise könnte der Schaltschrank 1 auch einen Einschub für die Kühleinrichtung 5b aufweisen, in welchen die Kühleinrichtung 5b einfach eingeschoben wird. In den Figuren 1 und 2 könnte ein solcher Schacht normal auf die Zeichnungsebene ausgerichtet sein.

Denkbar wäre schließlich auch, dass im Schaltschrank 1 mehrere Kühleinrichtungen 5a, 5b unterschiedlicher Bauart und insbesondere unterschiedlicher Größe verbaut sind. Diese können wie im gezeigten Beispiel einem Schaltgerät 3 oder auch mehreren im Schaltschrank 1 verbauten Schaltgeräten 3 zugeordnet sein. Die Kühleinrichtungen 5a und 5b können somit sehr gut an die Gegebenheiten im Schaltschrank 1 angepasst werden. Zum Beispiel kann an manchen Stellen mit 20% Druckreduzierung anstatt der üblichen 80-90% das Auslangen gefunden werden, wodurch das für die Kühleinrichtungen 5a, 5b erforderliche Volumen und damit einhergehend das Volumen des Schaltschranks 1 reduziert werden kann. Das heißt, dass bei beengtem Bauraum kleineren Kühleinrichtungen 5a, 5b der Vorzug gegeben werden kann, wohingegen in kritischen Bereichen an einer guten Kühlwirkung festgehalten wird, um das heiße Schaltgas stark abzukühlen. Je nach Bedarf kann das Schaltgas auch von einem Gefahrenbereich B..E weggelenkt werden. Unter Umständen kann bei einigen Auslässen 4a, 4b der Schaltgeräte 3 eine Kühleinrichtung 5a, 5b auch komplett entfallen. Der Ansatz, die Kühleinrichtungen 5a, 5b an den Schaltschrank 1 und nicht an das Schaltgerät 3 anzupassen, kommt bei der Verwendung von Kühleinrichtungen 5a, 5b unterschiedlicher Bauart besonders zum Tragen.

Insgesamt ergeben sich durch die Befestigung der Kühleinrichtung 5a, 5b an einem Gestell 2, 6 des Schaltschranks 1 folgende Vorteile:
- Die Kühleinrichtung 5a, 5b kann an den Schaltschrank 1, welcher in aller Regel hohe Wärmekapazität aufweist, thermisch gut angebunden werden. Daher kann die Wärme gut von der Kühleinrichtung 5a, 5b weg geleitet und eine Kühlwirkung derselben lange aufrechterhalten werden. Die Kühleinrichtung 5a, 5b können dementsprechend auch kleiner ausgeführt werden als bei Lösungen nach dem Stand der Technik.
- Die heißen, leitfähigen Schaltgase können von gefährdeten Bereichen weggeleitet werden, wodurch das Risiko eines zerstörerischen Störlichtbogens drastisch reduziert werden kann.
- Eine Befestigung der Kühleinrichtung 5a, 5b kann in einem gut zugänglichen und insbesondere in einem fingersicheren Bereich angeordnet werden, sodass ein Tausch oder eine Wartung einer Kühleinrichtung 5a, 5b gut und gefahrlos durchgeführt werden kann.
- Kräfte, welche von den Schaltgasen verursacht werden, können gut von der der Kühleinrichtung 5a, 5b in das Gestell 2, 6 abgeleitet werden, ohne dass das Schaltgerät 3 dazu übermäßig stabil ausgeführt werden müsste.
- Die Kühleinrichtungen 5a, 5b können hinsichtlich ihrer Kühlwirkung und damit hinsichtlich ihrer Größe gut an den konkreten Bedarf im Schaltschrank 1 angepasst werden. Damit und durch intelligente Positionierung und Orientierung der Kühleinrichtungen 5a, 5b kann das Volumen des Schaltschranks 1 bei gleicher Funktionalität gegenüber dem Stand der Technik reduziert werden.

Abschließend wird angemerkt, dass der Schaltschrank 1 respektive dessen Bauteile nicht notwendigerweise maßstäblich dargestellt sind und diese daher auch andere Proportionen aufweisen können. Weiterhin kann der Schaltschrank 1 auch mehr oder weniger Bauteile als dargestellt umfassen. Lageangaben (z.B. "oben", "unten", "links", "rechts", etc.) sind auf die jeweils beschriebene Figur bezogen und sind bei einer Lageänderung sinngemäß an die neue Lage anzupassen. Schließlich wird angemerkt, dass sich die obigen Ausgestaltungen und Weiterbildungen der Erfindung auf beliebige Art und Weise kombinieren lassen.

## Patentansprüche

1. Schaltschrank (1), umfassend
- ein Gestell (2, 6),
- blanke Stromleiter (7),
- zumindest ein im Gestell (2, 6) angeordnetes Schaltgerät (3) der Niederspannungstechnik, wobei das Schaltgerät (3) ein Gehäuse, einen im Gehäuse angeordneten, ungekapselten Schaltkontakt sowie einen Auslass (4a, 4b) für heiße Schaltgase eines Kontaktabbrandes des Schaltkontakts aus dem Gehäuse aufweist,
- eine dem genannten Auslass (4a, 4b) nachgeordnete und am Gestell (2, 6) befestigte Kühleinrichtung (5a, 5b) für die genannten Schaltgase und
- eine Trennwand (15) hinter dem Schaltgerät (3) und vor den Stromleitern (7), die ein Berühren der blanken spannungsführenden Stromleiter (7) verhindert, wobei Durchbrüche vom fingersicheren Bereich gemäß IPXXB / IEC61439 in einen Gefahrenbereich kleiner als ein Normfinger dick sind,
**dadurch gekennzeichnet, dass**
- die Befestigung der Kühleinrichtung (5a, 5b) am Gestell (2, 6) in dem fingersicheren Bereich nach IPXXB / IEC61439 angeordnet ist, so dass die Kühleinrichtung (5a,5b) gefahrlos getauscht werden kann, auch im laufenden Betrieb der im Schaltschrank (1) befindlichen Einbauten, und
- ein Auslass der Kühleinrichtung (5a, 5b) an Bereiche (B..E) zwischen zwei blanken Stromleitern (7, 8, L1..L3), welche für unterschiedliches Spannungspotential vorgesehen sind, vorbeiweist und die genannten Bereiche (B, C) von den leitfähigen Schaltgasen nur in geringem Ausmaß erreichbar sind.

2. Schaltschrank (1) nach Anspruch 1, **dadurch gekennzeichnet, dass** die Kühleinrichtung (5a, 5b) nur am Gestell (2, 6) befestigt ist.

3. Schaltschrank (1) nach Anspruch 1 oder 2, **dadurch gekennzeichnet, dass** eine Zone in Ausblasrichtung (A) des Auslasses der Kühleinrichtung (5a, 5b) bis zu einem Abstand (s) von 100 mm frei von Abschottungen/Prallblechen und frei von Bereichen (B..E) zwischen zwei blanken Stromleitern (7, 8, L1..L3) ist, welche für unterschiedliches Spannungspotential vorgesehen sind.

4. Schaltschrank (1) nach einem der Ansprüche 1 bis 3, **dadurch gekennzeichnet, dass** eine Richtung (A) des Auslasses der Kühleinrichtung (5a, 5b) bis zu einem Abstand (s) von 300 mm frei von Abschottungen/Prallblechen ist, jedoch dort ein Bereich (B..E) zwischen zwei blanken Stromleitern (7, 8, L1..L3) angeordnet ist, welche für unterschiedliches Spannungspotential vorgesehen sind.

5. Schaltschrank (1) nach einem der Ansprüche 1 bis 4, **dadurch gekennzeichnet, dass** der Auslass (4a, 4b) des Schaltgeräts (3) und der Auslass der Kühleinrichtung (5a, 5b) unterschiedlich orientiert sind.

6. Schaltschrank (1) nach einem der Ansprüche 1 bis 5, **dadurch gekennzeichnet, dass** die Kühleinrichtung (5a, 5b) einen Stapel von Kühlblechen (13) aufweist, die voneinander beabstandet sind.

7. Schaltschrank (1) nach Anspruch 6, **dadurch gekennzeichnet, dass** die Kühlbleche (13) in Richtung (G) des Auslasses (4a, 4b) des Schaltgeräts (3) ausgerichtet sind.

8. Schaltschrank (1) nach Anspruch 6, **dadurch gekennzeichnet, dass** die Kühlbleche (13) gegenüber der Richtung (G) des Auslasses (4a, 4b) des Schaltgeräts (3) geneigt sind.

9. Schaltschrank (1) nach einem der Ansprüche 6 bis 8, **dadurch gekennzeichnet, dass** die Kühlbleche (13) in einem kanalförmigen, metallenen Rahmen (14) angeordnet sind.

10. Schaltschrank (1) nach einem der Ansprüche 1 bis 9, **dadurch gekennzeichnet, dass** zwischen dem Gestell (2, 6) und der Kühleinrichtung (5a, 5b) ein elektrischer Isolator angeordnet ist.

11. Schaltschrank (1) nach einem der Ansprüche 1 bis 10, **dadurch gekennzeichnet, dass** die Befestigung der Kühleinrichtung (5a, 5b) auf einer Außenseite des Schaltschranks (1) angeordnet ist.

12. Schaltschrank (1) nach einem der Ansprüche 1 bis 11, **gekennzeichnet durch** mehrere Kühleinrichtungen (5a, 5b), die einem Schaltgerät (3) oder mehreren Schaltgeräten (3) zugeordnet und unterschiedlicher Bauart sind.

## Claims

1. Switchgear cabinet (1), comprising
- a frame (2, 6),
- bare current conductors (7),
- at least one low-voltage switchgear (3), arranged in the frame (2, 6), wherein the switchgear (3) has a housing, a non-encapsulated switch contact arranged in the housing as well as an outlet (4a, 4b) for letting hot switching gases of a contact burn-off of the switch contact out of the housing,
- a cooling device (5a, 5b) arranged downstream of the mentioned outlet (4a, 4b) and fastened on the frame (2, 6) for the mentioned switching gases and
- a partition wall (15) behind the switchgear (3) and in front of the current conductors (7), which prevents a contacting of the bare live current conductors (7), wherein breaches from the finger-safe area according to IPXXB/IEC61439 in a danger area are less than a standard finger in thickness,
**characterised in that**
- the fastening of the cooling device (5a, 5b) on the frame (2, 6) is arranged in the finger-safe area according to IPXXB/IEC61439, such that the cooling device (5a, 5b) can be exchanged without danger, even during operation of the components located in the switchgear cabinet (1), and
- an outlet of the cooling device (5a, 5b) points past areas (B..E) between two bare current conductors (7, 8, L1..L3), which are provided for different voltage potential, and the mentioned areas (B, C) can be reached only to a small extent by the conductive switching gases.

2. Switchgear cabinet (1) according to claim 1, **characterised in that** the cooling device (5a, 5b) is fastened only on the frame (2, 6).

3. Switchgear cabinet (1) according to claim 1 or 2, **characterised in that** a zone in discharge direction (A) of the outlet of the cooling device (5a, 5b) up to a distance (s) of 100 mm is free from partitions/baffle plates and free of areas (B..E) between two bare current conductors (7, 8, L1..L3) which are provided for different voltage potential.

4. Switchgear cabinet (1) according to any of claims 1 to 3, **characterised in that** a direction (A) of the outlet of the cooling device (5a, 5b) up to a distance (s) of 300 mm is free from partitions/baffle plates, however an area (B..E) is arranged there between two bare current conductors (7, 8, L1..L3) which are provided for different voltage potential.

5. Switchgear cabinet (1) according to any of claims 1 to 4, **characterised in that** the outlet (4a, 4b) of the switchgear (3) and the outlet of the cooling device (5a, 5b) are differently oriented.

6. Switchgear cabinet (1) according to any of claims 1 to 5, **characterised in that** the cooling device (5a, 5b) has a stack of cooling plates (13) which are spaced from one another.

7. Switchgear cabinet (1) according to claim 6, **characterised in that** the cooling plates (13) are aligned in the direction (G) of the outlet (4a, 4b) of the switchgear (3).

8. Switchgear cabinet (1) according to claim 6, **characterised in that** the cooling plates (13) are tilted with respect to the direction (G) of the outlet (4a, 4b) of the switchgear (3).

9. Switchgear cabinet (1) according to any of claims 6 to 8, **characterised in that** the cooling plates (13) are arranged in a channel-shaped metallic frame (14).

10. Switchgear cabinet (1) according to any of claims 1 to 9, **characterised in that** between the frame (2, 6) and the cooling device (5a, 5b) is arranged an electrical isolator.

11. Switchgear cabinet (1) according to any of claims 1 to 10, **characterised in that** the fastening of the cooling device (5a, 5b) is arranged on an outer side of the switchgear cabinet (1).

12. Switchgear cabinet (1) according to any of claims 1 to 11, **characterised by** a plurality of cooling devices (5a, 5b), which are assigned to one switchgear (3) or a plurality of switchgears (3) and are of different designs.

## Revendications

1. Armoire électrique (1), comprenant
- un châssis (2, 6),
- des conducteurs de courant nus (7),
- au moins un appareil de commutation (3) à technologie basse tension disposé dans le châssis (2, 6), l'appareil de commutation (3) comportant un boîtier, un contact de commutation non encapsulé, disposé dans le boîtier, ainsi qu'une sortie d'évacuation (4a, 4b) destinée à évacuer du boîtier des gaz de commutation chauds dus à une usure des contacts du contact de commutation,
- un dispositif de refroidissement (5a, 5b) pour lesdits gaz de commutation, disposé après ladite sortie d'évacuation (4a, 4b) et fixé sur le châssis (2, 6) et
- une paroi de séparation (15) en arrière de l'appareil de commutation (3) et en avant des conducteurs de courant (7), qui empêche un contact des conducteurs de courant nus (7) sous tension, dans une zone dangereuse les ouvertures de passage de la zone de sécurité pour les doigts selon IPXXB / IEC61439 étant plus petites que l'épaisseur d'un doigt normal,
**caractérisée en ce que**
- la fixation du dispositif de refroidissement (5a, 5b) sur le châssis (2, 6) est placée dans la zone de sécurité pour les doigts selon IPXXB / IEC61439, de sorte que le dispositif de refroidissement (5a, 5b) peut être remplacé sans danger, même en cours de fonctionnement des éléments installés dans l'armoire électrique (1), et
- une sortie d'évacuation du dispositif de refroidissement (5a, 5b) conduit à des zones (B..E) entre deux conducteurs de courant nus (7, 8, L1..L3), qui sont prévus pour une tension différente et lesdites zones (B, C) ne peuvent être atteintes qu'à un faible degré par les gaz de commutation conducteurs.

2. Armoire électrique (1) selon la revendication 1, **caractérisée en ce que** le dispositif de refroidissement (5a, 5b) n'est fixé que sur le châssis (2, 6).

3. Armoire électrique (1) selon la revendication 1 ou 2, **caractérisée en ce qu'**une zone en direction d'évacuation (A) de la sortie d'évacuation du dispositif de refroidissement (5a, 5b) est dépourvue jusqu'à une distance (s) de 100 mm de cloisonnements/tôles de chicanes et dépourvue de zones (B..E) entre deux conducteurs de courant nus (7, 8, L1..L3) qui sont prévus pour une tension différente.

4. Armoire électrique (1) selon l'une quelconque des revendications 1 à 3, **caractérisée en ce qu'**une direction (A) de la sortie d'évacuation du dispositif de refroidissement (5a, 5b) est dépourvue jusqu'à une distance (s) de 300 mm de cloisonnements/tôles de chicanes, mais y est ménagée une zone (B..E) entre deux conducteurs de courant nus (7, 8, L1..L3) qui sont prévus pour une tension différente.

5. Armoire électrique (1) selon l'une quelconque des revendications 1 à 4, **caractérisée en ce que** la sortie d'évacuation (4a, 4b) de l'appareil de commutation (3) et la sortie d'évacuation du dispositif de refroidissement (5a, 5b) sont orientées différemment.

6. Armoire électrique (1) selon l'une quelconque des revendications 1 à 5, **caractérisée en ce que** le dispositif de refroidissement (5a, 5b) comporte une pile de tôles de refroidissement (13) qui sont écartées les unes des autres.

7. Armoire électrique (1) selon la revendication 6, **caractérisée en ce que** les tôles de refroidissement (13) sont orientées en direction (G) de la sortie d'évacuation (4a, 4b) de l'appareil de commutation (3).

8. Armoire électrique (1) selon la revendication 6, **caractérisée en ce que** les tôles de refroidissement (13) sont inclinées par rapport à la direction (G) de la sortie d'évacuation (4a, 4b) de l'appareil de commutation (3).

9. Armoire électrique (1) selon l'une quelconque des revendications 6 à 8, **caractérisée en ce que** les tôles de refroidissement (13) sont disposées dans un cadre métallique (14) en forme de canal.

10. Armoire électrique (1) selon l'une quelconque des revendications 1 à 9, **caractérisée en ce qu'**un isolateur électrique est disposé entre le châssis (2, 6) et le dispositif de refroidissement (5a, 5b).

11. Armoire électrique (1) selon l'une quelconque des revendications 1 à 10, **caractérisée en ce que** la fixation du dispositif de refroidissement (5a, 5b) est placée sur une face extérieure de l'armoire électrique (1).

12. Armoire électrique (1) selon l'une quelconque des revendications 1 à 11, **caractérisée par** plusieurs dispositifs de refroidissement (5a, 5b) qui sont affectés à une armoire électrique (3) ou à plusieurs armoires électriques (3) et sont de type de construction différent.
